# EUROPÄISCHE PATENTSCHRIFT

(11) **EP 1 901 003 B1**
(45) Veröffentlichungstag und Bekanntmachung des Hinweises auf die Patenterteilung: **02.09.2020**
(21) Anmeldenummer: 07013195.8
(22) Anmeldetag: 05.07.2007
(51) Int. Cl.: F23B 80/02, F23G 5/16

(54) **Verfahren zur Verbrennungsgaszuführung**
Method for feeding combustion gas
Procédé d'alimentation de gaz de combustion

(30) Priorität: 13.09.2006 DE 102006043807
(43) Veröffentlichungstag der Anmeldung: 19.03.2008
(73) Patentinhaber: MARTIN GmbH für Umwelt- und Energietechnik, 80807 München (DE)
(72) Erfinder: Martin, Johannes, 81929 München (DE); Horn, Joachim, 83623 Lochen (DE); Gohlke, Oliver, 81377 München (DE)
(74) Vertreter: Castell, Klaus

(56) Entgegenhaltungen:
- EP-A- 0 498 014
- EP-A- 1 698 827
- WO-A-99/58902
- DE-A1- 3 712 039
- DE-A1- 19 938 269
- US-A- 5 020 456
- US-A- 5 205 227

## Beschreibung

Die Erfindung bezieht sich auf ein Verfahren zur Verbrennungsführung bei Rostfeuerungen, bei dem Primärverbrennungsgas durch den Brennstoff hindurch und Sekundärverbrennungsgas oberhalb des Brennstoffes direkt in den Abgasstrom eingeführt wird, wobei Primärverbrennungsgas Umgebungsluft oder mit Sauerstoff angereicherte Umgebungsluft ist und Sekundärverbrennungsgas Umgebungsluft ist und bei dem ein Teil des Abgases aus dem Abgasstrom im hinteren Rostbereich abgesaugt und dem Verbrennungsprozess als internes Rezirkulationsgas in einem Tertiärbereich wieder zugeführt wird.

Ein Verfahren dieser Art ist aus der EP 0498014 B 2 bekannt. Dort wurde dieses Verfahren angewandt, um die Menge des Abgasstromes zu vermindern, ohne jedoch die Möglichkeiten zur Reduzierung von Schadstoffemissionen zu behandeln.

Nach derzeitigen Erkenntnissen reagiert ein teil des im Abfall enthaltenen Stickstoffs bei der Verbrennung zu NO bzw. NO₂, das mit den Abgasen die Verbrennung verlässt und aufwändig behandelt werden muss, um nicht in die Umwelt als Schadstoff (NOₓ/Stickoxid) auszutreten. Ein weiterer Teil des Brennstickstoffs reagiert zu NH- oder CN-Verbindungen/Radikalen, die als sog. Zwischenprodukte bei hohen Temperaturen nicht stabil sind und weiterreagieren. Da diese Zwischenprodukte/Radikale in der Lage sind, bereits gebildetes NO/NO₂ zu N₂ zu reduzieren, ist es sinnvoll, die Verbrennungsführung so zu gestalten, dass man diesen Effekt als prozessinhärentes Entstickungsverfahren nutzt.

Nach dem Stand der Technik gestaltet man die Verbrennungsführung in den Feuerräumen von Rostverbrennungsanlagen so, dass man oberhalb des Verbrennungsrostes und nach der auf dem Rost stattfindenden Primärverbrennung unmittelbar eine Sekundärverbrennungszone als Zone hoher Turbulenz unter Zuführung von Umgebungsluft oder rückgeführtem Abgas ausbildet, in der eine möglichst vollständige Verbrennung aller noch vorhandenen brennbaren Gasbestandteile (Gase und Feststoffpartikel) stattfindet.

Dabei erfolgt die Prozessführung so, dass die Verbrennungsreaktionen unter überstöchiometrischen Reaktionsbedingungen ablaufen, in der Regel bei einer Luftzahl Lamda = 1,7 bis Lamda = 2,2. Die Zugabe von Sekundärluft und/oder rückgeführtem Abgas im Nachverbrennungsbereich mit hohem Impuls und entsprechend hoher Mischwirkung führt dazu, dass die o.g. Zwischenprodukte (NH- oder CN-Verbindungen) frühzeitig zerstört, d.h. oxidiert werden und somit für eine Reaktion mit bereits gebildeten Stickstoffoxiden (NOₓ) nicht mehr zur Verfügung stehen. Das rückgeführte Abgas wird dabei in der Regel nach Durchlaufen eines Dampferzeugers und meist auch zusätzlich einer Abgasreinigungsanlage entnommen, so dass man bei diesem Gasstrom von einem "externen Rezirkulationsgas" sprechen kann.

Eine deutlich unterstöchiometrische Fahrweise in der Primärverbrennung führt, vor allem bei der Zuführung von Brennstoffen, die in ihrem Heizwert und Verbrennungsverhalten stark schwanken, dazu dass ein vollständiger Feststoffausbrand nicht immer sichergestellt werden kann. Eine nahstöchiometrische Betriebsweise im Bereich der Sekundärverbrennung, d.h. bei Lamda ≤ 1,6, führt zu unverbrannten Gasbestandteilen und als Folge unerwünschten Emissionen in die Umwelt bzw. Korrosionen im nachgeschalteten Dampferzeuger.

Die US 05205227 A beschreibt ein ähnliches Verfahren, bei dem im Sekundärbereich Brennstoff zur Nachverbrennung zugeführt wird.

Aufgabe der Erfindung ist es, die Verbrennungsführung so zu regeln, dass ein optimaler Ausbrand des festen Brennstoffes und ein optimaler Ausbrand der Abgase erreicht wird, dass hierbei möglichst wenig Stickoxid gebildet bzw. emittiert wird und dass ein stabiler Betrieb bei geringen Luftüberschusszahlen (Lamda = 1,3 bis Lamda = 1,4) bei einem möglichst geringen Abgasvolumen durchgeführt werden kann.

Diese Aufgabe wird durch ein Verfahren zur Verbrennungsführung gemäß Anspruch 1 gelöst.

Unter Primärverbrennungsgas wird Umgebungsluft verstanden. In besonderen Fällen kann aber auch diese Umgebungsluft mit Sauerstoff angereichert sein.

Um einen möglichst optimalen Ausbrand der Festbrennstoffe zu erreichen, erfolgt eine gegenüber konventioneller Betriebsweise der Rostfeuerung unveränderte Zugabe des Primärverbrennungsgases in annähernd stöchiometrischer Menge. Um das Ziel des geringen Luftüberschusses für den gesamten Verbrennungsprozess dennoch zu erreichen und den zur Mischung bzw. Homogenisierung des Verbrennungsgases notwendigen Volumenstrom an Sekundärverbrennungsgas zu schaffen, wird die Summe aus Primärverbrennungsgasmenge und Sekundärverbrennungsgasmenge soweit abgesenkt, dass im wesentlichen stöchiometrische oder nahstöchiometrische Reaktionsbedingungen erreicht werden Dies wird in der Praxis dadurch eingestellt, dass derjenige Teil, der in der Primärverbrennung gebildeten Gase, der noch deutliche Mengen an unreagiertem Sauerstoff enthält, daran gehindert wird, in die Sekundärverbrennungszone zu entweichen.

Es handelt sich bei diesen Gasen um denjenigen Volumenstrom, der im hinteren Bereich des Verbrennungsrostes entsteht. Dort wird Primärverbrennungsluft in erster Linie deshalb zugegeben, um den vollständigen Ausbrand der festen Brennstoffe (Restausbrand) sicherzustellen und die Verbrennungsrückstände (Schlacke) abzukühlen. Der dabei entstehende Abgasstrom ist deshalb gekennzeichnet durch einen gegenüber der Umgebungsluft nur geringfügig reduzierten Sauerstoffgehalt.

Durch Absaugung des Volumenstromes aus dem hinteren Bereich der Brennkammer wird dieser Gasstrom aus dem System ausgeschleust, wodurch er daran gehindert wird, in die Sekundärverbrennungszone zu entweichen. Dieses Gas wird als internes Rezirkulationsgas bezeichnet und entsprechend der Erfindung im oberen Bereich des Feuerraumes, d.h. deutlich nach der Sekundärverbrennungszone wieder zugeben.

In diesem Bereich, der als Tertiärverbrennungsbereich bezeichnet wird, haben die Abgase nach der Sekundärverbrennungsgaszuführung eine Verweilzeit von mindestens einer Sekunde, vorteilhafter Weise sogar von über zwei Sekunden. Im Sekundärverbrennungsbereich wird bei dem erfindungsgemäßen Verfahren nur soviel Sauerstoff in Form des Sekundärverbrennungsgases zugegeben, dass eine hinreichend gute Mischung bzw. Homogenisierung des Abgasstromes erreicht werden kann.

Durch die Absenkung der Primärverbrennungsgasmenge in die Nähe stöchiometrischer Reaktionsbedingungen, vorzugsweise in Bereiche mit leichter Unterstöchiometrie, wird einerseits weniger NOₓ, andererseits werden jedoch mehr NH- und CN-Verbindungen gebildet.

Wenn man nunmehr eine in ihrer Wirksamkeit verminderte Sekundärverbrennungszone einstellt, die zwar eine gewisse Durchmischung und Homogenisierung des Abgasstromes ermöglicht, ohne dabei in einer intensiven Nachverbrennung alle NH- und CN- Verbindungen zu zerstören, gibt man diesen Verbindungen die Möglichkeit NOₓ zu N₂ zu reduzieren.

Erfahrungsgemäß reicht für einen guten Reaktionswirkungsgrad hierfür eine Verweilzeit im Bereich von 1 bis 2 Sekunden aus. Insbesondere bei Zuführung von externem Rezirkulationsgas in den Sekundärverbrennungsbereich wird diese Teilaufgabe der Geringhaltung von Stickoxid sehr gut gelöst. Allerdings muss man dabei als Nachteil in Kauf nehmen, dass ein vollständiger Ausbrand der Abgase, vor allem eine vollständige Zerstörung von Schadgasen nicht immer sicher gestellt werden kann, so dass ein weiterer Reaktionsbereich geschaffen werden muss.

Um dies zu erreichen, wird entsprechend der Erfindung anschließend an den Sekundärverbrennungsbereich ein Tertiärverbrennungsbereich gebildet, in dem der vollständige Gasausbrand und die Zerstörung eventuell noch vorhandener organischer Verbindungen erfolgen. Die hierfür notwendige Turbulenz und der hierfür notwendige erforderliche Luftüberschuss werden entsprechend der Erfindung mit internem Rezirkulationsgas eingestellt. Dieses interne Rezirkulationsgas ist dasjenige Gas, welches im hinteren Bereich des Rostes abgesaugt wurde und daran gehindert wurde, in den Sekundärverbrennungsbereich einzudringen.

Der Gesamtluftüberschuss des Verbrennungsprozesses wird nicht weiter angehoben, wodurch die Teilaufgabe gelöst wird, den Verbrennungsprozess mit geringen Luftüberschusszahlen durchzuführen. Außerdem wird durch die Maßnahme der internen Rezirkulationsgasrückführung erreicht, dass keine zusätzliche Tertiärverbrennungsluft in Form von Umgebungsluft verwendet wird, wodurch das Abgasvolumen möglichst kleingehalten werden kann.

Um ein weiteres Absenken des NOₓ-Gehaltes zu ermöglichen und auch diejenigen NOₓ-Moleküle zu erfassen, die bis zum Beginn des Tertiärverbrennungsbereiches noch nicht reduziert werden konnten, kann in weiterer Ausgestaltung der Erfindung im Bereich der Tertiärverbrennungsgaszugabe ein chemisches Mittel zur Stickoxidreduzierung in den Abgasstrom der Verbrennungsanlage eingedüst werden.

In weiterer Ausgestaltung der Erfindung kann das chemische Mittel zur Stickoxidreduzierung auch dem Tertiärverbrennungsgas, d.h. dem internen Rezirkulationsgas beigemischt werden. In diesem Fall kann man die gute Turbulenzwirkung der Tertiärverbrennungsgaszugabe auch für die intensive Mischung dieses chemischen Mittels mit dem Abgasstrom nutzen.

Diese chemischen Mittel sind aus den Verfahren der selektiven nichtkatalytischen Reaktion (SNCR-Verfahren) bekannt, wobei es sich vorzugsweise um Harnstoff oder Ammoniakwasser handelt.

Weiterhin ist es vorteilhaft, wenn im Tertiärverbrennungsbereich oder oberhalb desselben, d.h. oberhalb der Einführung von internem Rezirkulationsgas eine erhöhte Turbulenz der Abgase erzeugt wird. Dies kann zusätzlich zu der Turbulenz, die sich aus der Einführung des internen Rezirkulationsgases ergibt, dadurch erzielt werden, dass beispielsweise der Abgaszug des Feuerraumes im Bereich der Einführung des internen Rezirkulationsgases oder oberhalb desselben verengt wird oder es werden Einbauten zur Steigerung der Turbulenz verwendet.

Für die Erfindung eignet sich eine Feuerungsanlage zur Durchführung des Verfahrens. Diese Feuerungslage hat einen Feuerungsrost, eine Einrichtung unterhalb des Feuerungsrostes zur Zuführung von Primärverbrennungsluft durch den Feuerungsrost hindurch, sowie in den Feuerraum einmündende Düsen oberhalb des Feuerungsrostes zur Zuführung von Sekundärverbrennungsgas, wobei im Feuerraum über dem Feuerungsrost mindestens eine Absaugleitung für Abgas vorgesehen ist, wobei die Saugseite eines Ventilators ausschließlich mit der Absaugleitung verbunden ist, dessen Druckseite über eine Leitung mit Düsen in einen Tertiärverbrennungsbereich verbunden ist, die in einer Höhe über dem Feuerungsrost vorgesehen sind, in welcher die Abgase nach der Sekundärverbrennungsgaszuführung eine Verweilzeit von mindestens einer Sekunde aufweisen.

Zur besseren Vermischung wird vorgeschlagen, dass der Abgaszug des Feuerraumes im Tertiärverbrennungsbereich oder oberhalb desselben zur Erzeugung einer Turbulenz verengt ist. Außerdem ist es vorteilhaft, wenn im Abgaszug des Feuerraumes im Tertiärverbrennungsbereich oder oberhalb desselben zur Erzeugung einer Turbulenz, den Abgasstrom störende Einbauten vorgesehen sind.

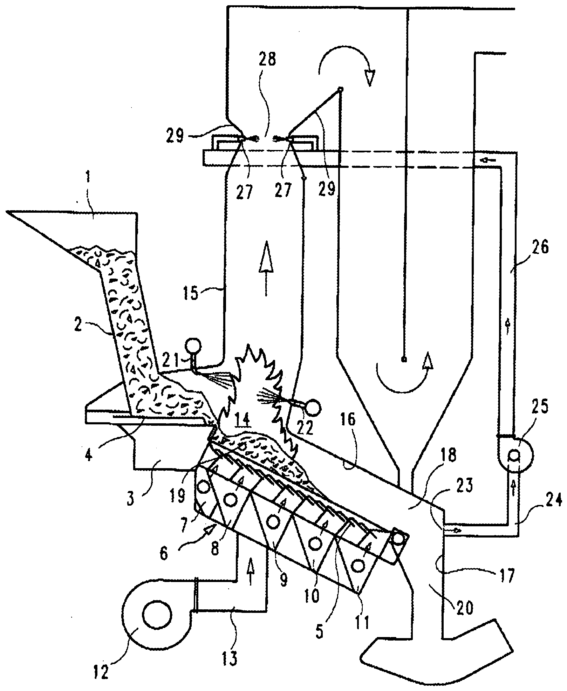

Die Erfindung wird nachfolgend anhand eines in der Zeichnung dargestellten Ausführungsbeispiels näher erläutert.

Die einzige Figur zeigt einen Längsschnitt durch eine Feuerungsanlage in schematischer Darstellung.

Wie aus der Zeichnung ersichtlich weist eine Feuerungsanlage einen Aufgabetrichter 1 mit anschließender Aufgabeschurre 2 für die Aufgabe des Brenngutes auf einen Aufgabetisch 3 auf, auf dem Beschickkolben 4 hin und her bewegbar vorgesehen sind, um das aus der Aufgabeschurre 2 kommende Brenngut auf einen Feuerungsrost 5 aufzugeben, auf dem die Verbrennung des Brenngutes stattfindet. Hierbei ist es unerheblich, ob es sich um einen geneigten oder horizontal liegenden Rost egal welchen Prinzips handelt.

Unterhalb des Feuerungsrostes 5 ist eine insgesamt mit 6 bezeichnete Einrichtung zur Zuführung von Primärverbrennungsluft angeordnet, die mehrere Kammern 7 bis 11 umfassen kann, denen mittels eines Ventilators 12 über eine Leitung 13 Primärverbrennungsluft zugeführt wird. Durch die Anordnung der Kammern 7 bis 11 ist der Feuerungsrost in mehrere Unterwindzonen unterteilt, so dass die Primärverbrennungsluft entsprechend den Bedürfnissen auf dem Feuerungsrost unterschiedlich eingestellt werden kann.

Über dem Feuerungsrost 5 befindet sich ein Feuerraum 14, der im vorderen Teil in einen Abgaszug 15 übergeht, an den sich nicht dargestellte Aggregate wie z.B. ein Abhitzekessel und eine Abgasreinigungsanlage anschließen. Im hinteren Bereich ist der Feuerraum 14 durch eine Decke 16, eine Rückwand 17 und Seitenwände 18 begrenzt.

Die Verbrennung des mit 19 bezeichneten Brenngutes erfolgt auf dem vorderen Teil des Feuerungsrostes 5, über dem sich der Abgaszug 15 befindet. In diesem Bereich wird durch die Kammern 7, 8 und 9 die meiste Primärverbrennungsluft zugeführt. Auf dem hinteren Teil des Verbrennungsrostes 5 befindet sich nur weitgehend ausgebranntes Brenngut, d.h. die Schlacke, und in diesem Bereich wird Primärverbrennungsluft über die Kammern 10 und 11 im wesentlichen nur zur Kühlung und zum Restausbrand dieser Schlacke zugeführt.

Die ausgebrannten Teile des Brenngutes fallen dann in einen Schlackenaustrag 20 am Ende des Verbrennungsrostes 5. Im unteren Bereich des Abgaszuges 15 sind Düsen 21 und 22 vorgesehen, die Sekundärverbrennungsgas dem aufsteigenden Abgas zuführen, um eine Durchmischung des Abgasstroms und eine Nachverbrennung der im Abgas befindlichen brennbaren Anteile zu bewirken.

Zur Durchführung des erfindungsgemäßen Verfahrens wird nun im hinteren Teil des Verbrennungsraumes, der von der Decke 16, der Rückwand 17 und den Seitenwänden 18 begrenzt ist, Abgas abgesaugt, welches als internes Rezirkulationsgas bezeichnet wird.

Im dargestellten Ausführungsbeispiel ist eine Absaugöffnung 23 in der Rückwand 17 vorgesehen. Diese Absaugöffnung 23 ist über eine Absaugleitung 24 mit der Saugseite eines Ventilators 25 verbunden, so dass Abgas abgesaugt werden kann. Mit der Druckseite des Ventilators ist eine Leitung 26 verbunden, die die abgesaugte Abgasmenge Düsen 27 im oberen Bereich des Abgaszuges 15, dem Tertiärverbrennungsbereich 28 zuführt. In dem Bereich von der Sekundärverbrennungsgaseinführung bis zur Zuführung von internem Rezirkulationsgas hat das Abgas ausgehend von den Sekundärverbrennungsluftdüsen 21 und 22 eine Verweilzeit von mindestens 1 Sekunde bzw. vorteilhaft sogar mindestens 2 Sekunden durchlaufen.

In dem Tertiärverbrennungsbereich 28 oder oberhalb desselben ist zur Erhöhung der Turbulenz und der Mischwirkung des Abgasstromes der Abgaszug 15 deutlich eingeschnürt, wobei sich die Düsen 27 in diesem eingeschnürten Bereich befinden. Es können aber auch Einbauten oder Elemente 29 vorgesehen sein, die den Gasstrom stören und somit eine Turbulenz erzeugen.

## Patentansprüche

1. Verfahren zur Verbrennungsführung bei Rostfeuerungen, bei dem Primärverbrennungsgas durch den Brennstoff hindurch und Sekundärverbrennungsgas oberhalb des Brennstoffs direkt in den Abgasstrom eingeführt wird, wobei Primärverbrennungsgas Umgebungsluft oder mit Sauerstoff angereicherte Umgebungsluft ist und Sekundärverbrennungsgas Umgebungsluft ist, und bei dem ein Teil des Abgases aus dem Abgasstrom im hinteren Rostbereich abgesaugt und dem Verbrennungsprozess als internes Rezirkulationsgas in einem Tertiärverbrennungsbereich wieder zugeführt wird, wobei die Primärverbrennungsgasmenge in Bereiche mit leichter Unterstöchiometrie abgesenkt wird und die Summe aus Primärverbrennungsgasmenge und Sekundärverbrennungsgasmenge soweit abgesenkt wird, dass bezogen auf den Abgasstrom direkt oberhalb der Sekundärverbrennungsgasebene, im wesentlichen stöchiometrische oder nahstöchiometrische Reaktionsbedingungen erreicht werden indem derjenige Teil, der in der Primärverbrennung gebildeten Gase, der noch deutliche Mengen an unreagiertem Sauerstoff enthält, durch Absaugung des Volumenstroms aus dem hinteren Rostbereich daran gehindert wird, in die Sekundärverbrennungszone zu entweichen und die Abgase von der Sekundärverbrennungsgaseinführung bis zur Zuführung von internem Rezirkulationsgas eine Verweilzeit von mindestens einer Sekunde aufweisen und wobei ein stabiler Betrieb bei Luftüberschusszahlen von Lambda 1,3 bis 1,4 durchgeführt wird.

2. Verfahren nach Anspruch 1, ***dadurch gekennzeichnet, dass*** im Bereich der Zuführung von internem Rezirkulationsgas, d.h. im Tertiärverbrennungsbereich ein chemisches Mittel zur Stickoxidreduzierung eingedüst wird.

3. Verfahren nach Anspruch 2, ***dadurch gekennzeichnet, dass*** dem Tertiärverbrennungsgas, d.h. dem internen Rezirkulationsgas, ein chemisches Mittel zur Stickoxidreduzierung beigemischt wird.

4. Verfahren nach Anspruch 2 oder 3, ***dadurch gekennzeichnet, dass*** als chemisches Mittel Harnstoff oder Ammoniak verwendet wird.

5. Verfahren nach einem der Ansprüche 1 bis 4, ***dadurch gekennzeichnet, dass*** im Tertiärverbrennungsbereich oder oberhalb desselben, d.h. oberhalb der Einführung von internem Rezirkulationsgas, eine erhöhte Turbulenz der Abgase erzeugt wird.

## Claims

1. A method for combustion management in grate furnaces, in which primary combustion gas is introduced directly into the exhaust gas flow through the fuels, and secondary combustion gas above the fuel, wherein primary combustion gas is ambient air or oxygen-enriched ambient air, and secondary combustion gas is ambient air, and in which a portion of the exhaust gas is siphoned out of the exhaust gas flow in the rear grate area and fed back to the combustion process again as an internal recirculation gas in a tertiary combustion area, wherein the primary combustion gas quantity is lowered in slightly sub-stoichiometric areas, and the sum of primary combustion gas quantity and secondary combustion gas quantity is lowered to an extent where essentially stoichiometric or nearly stoichiometric reaction conditions are reached in relation to the exhaust gas flow directly above the secondary combustion gas level, by virtue of the fact that the portion of the gases formed in the primary combustion step that still contains distinct quantities of unreacted oxygen is prevented from escaping into the secondary combustion zone by siphoning the volume flow out of the rear grate area, and the exhaust gases have a retention time of at least one second from the introduction of secondary combustion gas to the supply of internal recirculation gas, and wherein a stable operation takes place at excess air numbers of lambda 1.3 to 1.4.

2. The method according to claim 1, ***characterized in that*** a chemical agent for nitrogen oxide reduction is injected in the area where internal recirculation gas is supplied, i.e., in the tertiary combustion area.

3. The method according to claim 2, ***characterized in that*** a chemical agent for nitrogen oxide reduction is mixed into the tertiary combustion gas, i.e., the internal recirculation gas.

4. The method according to claim 2 or 3, ***characterized in that*** urea or ammonia is used as the chemical agent.

5. The method according to one of claims 1 to 4, ***characterized in that*** an elevated turbulence is generated for the exhaust gases in the tertiary combustion area or above the latter, i.e., above the point where internal recirculation gas is introduced.

## Revendications

1. Procédé de gestion de combustion pour des foyers à grille, pour lequel du gaz de combustion primaire est introduit directement dans le flux de gaz d'échappement à travers le combustible et le gaz de combustion secondaire au-dessus du combustible, sachant que le gaz de combustion primaire est l'air ambiant ou l'air ambiant enrichi en oxygène et le gaz de combustion secondaire est de l'air ambiant et pour lequel une partie des gaz d'échappement est aspirée du flux de gaz d'échappement dans la zone de grille arrière et est à nouveau dirigée vers le processus de combustion en tant que gaz de recirculation interne dans une zone de combustion tertiaire, sachant que la quantité de gaz de combustion primaire est abaissée dans les zones présentant une légère sous-stœchiométrie et la somme de la quantité de gaz de combustion primaire et de la quantité de gaz de combustion secondaire est diminuée dans une proportion telle qu'en se référant au flux de gaz d'échappement, des conditions de réactions pour l'essentiel stœchiométriques ou presque stœchiométriques sont obtenues directement au-dessus du plan de gaz de combustion secondaire, la partie des gaz formés dans la combustion primaire, qui contient des quantités encore distinctes en oxygène non réagi, étant empêchée par aspiration du flux volumique de la zone de grille arrière de s'échapper dans la zone de combustion secondaire et les gaz d'échappement comportent une durée de séjour d'au moins une seconde de l'introduction du gaz de combustion secondaire jusqu'à l'alimentation du gaz de recirculation interne et sachant qu'un fonctionnement stable est exécuté à des indices d'excès d'air de lambda 1,3 à 1,4.

2. Procédé selon la revendication 1, ***caractérisé en ce que*** dans la zone d'alimentation du gaz de recirculation interne, c'est-à-dire dans la zone de combustion tertiaire, est injecté un agent chimique de réduction d'oxyde d'azote.

3. Procédé selon la revendication 2, ***caractérisé en ce qu'***un agent chimique est ajouté par mélange pour la réduction d'oxyde d'azote au gaz de combustion tertiaire, c'est-à-dire au gaz de recirculation interne.

4. Procédé selon la revendication 2 ou 3, ***caractérisé en ce que*** de l'urée ou de l'ammoniac est utilisé en tant qu'agent chimique.

5. Procédé selon l'une quelconque des revendications 1 à 4, ***caractérisé en ce qu***'une turbulence accrue des gaz d'échappement est produite dans la zone de combustion tertiaire ou au-dessus de celle-ci, c'est-à-dire au-dessus de l'entrée du gaz de recirculation interne.
